# EUROPEAN PATENT SPECIFICATION

(11) **EP 4 294 724 B1**
(45) Date of publication and mention of the grant of the patent: **30.10.2024**
(21) Application number: 22711711.6
(22) Date of filing: 11.02.2022
(51) Int. Cl.: H04W 12/06, H04W 12/082, G08G 5/00

(54) **METHOD AND SYSTEM FOR 5GS AND EPS INTERWORKING FOR UAV COMMUNICATION**
VERFAHREN UND SYSTEM ZUR 5GS- UND EPS-VERNETZUNG FÜR UAV-KOMMUNIKATION
PROCÉDÉ ET SYSTÈME PERMETTANT L'INTERFONCTIONNEMENT DE 5G ET EPS DANS LE CADRE DE LA COMMUNICATION DE VÉHICULE AÉRIEN SANS PILOTE (UAV)

(30) Priority: 17.02.2021 US 202163150120 P; 04.05.2021 US 202163183822 P; 07.10.2021 US 202163253218 P
(43) Date of publication of application: 27.12.2023
(73) Proprietor: InterDigital Patent Holdings, Inc., Wilmington, DE 19809 (US)
(72) Inventor: WANG, Guanzhou, Montreal, Québec H3A 3G4 (CA); FERDI, Samir, Montreal, Québec H3A 3G4 (CA); AHMAD, Saad, Montreal, Québec H3A 3G4 (CA)
(74) Representative: Interdigital
(86) International application number: PCT/US2022/016104
(87) International publication number: WO 2022/177817

(56) References cited:
- EP-A1- 3 627 259
- US-A1- 2014 005 933
- US-A1- 2018 329 433

## Description

### CROSS REFERENCE TO RELATED APPLICATIONS

### BACKGROUND

The present disclosure is generally directed to the fields of communications, software and encoding, including, for example, to methods, architectures, apparatuses, systems directed to handling Unmanned Aerial Systems (UAS). The patent document EP 3627259 discloses a network system with nodes adapted to determine the location of other neighbouring nodes in a collaborative manner. An active node. i.e. an unmanned robot, sends a probe signal and derives location information from the reply sent by one or more passive devices. Roles can be inverted, and the passive node can include position information in its reply, thus acting as the new serving anchor node.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 illustrates a high-level UUAA procedure during 5GS Registration;
FIG. 3 illustrates a high-level UUAA procedure during PDU session establishment;
FIG. 4 illustrates a system architecture for 5GS and EPS interworking;
FIGS. 5A and 5B illustrate UUAA context alignment in case of UE mobility from EPS to 5GS according to an embodiment of the present principles;
FIGS. 6A and 6B illustrate UUAA context alignment in case of UE mobility from EPS to 5GS according to a further embodiment of the present principles;
FIG. 7 illustrates a method of UAS-NF establishment of UAV context during UUAA according to an embodiment of the present principles;
FIG. 8 illustrates a method of UAS-NF update of UAV context during re-authentication/ authorization according to an embodiment of the present principles;
FIG. 9 illustrates a method of UAS-NF querying during interworking according to an embodiment of the present principles; and
FIG. 10 illustrates a method of network-triggered UAV re-authentication during interworking according to an embodiment of the present principles;
FIG. 11 illustrates a method of AMF change handling according to an embodiment of the present principles; and
FIGS. 12A and 12B illustrate a method of UUAA context alignment in case of UE mobility from 5GS to EPS.

### DETAILED DESCRIPTION

The invention is defined in the independent claims. Particular embodiments are set out in the dependent claims.

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### Example Communications System

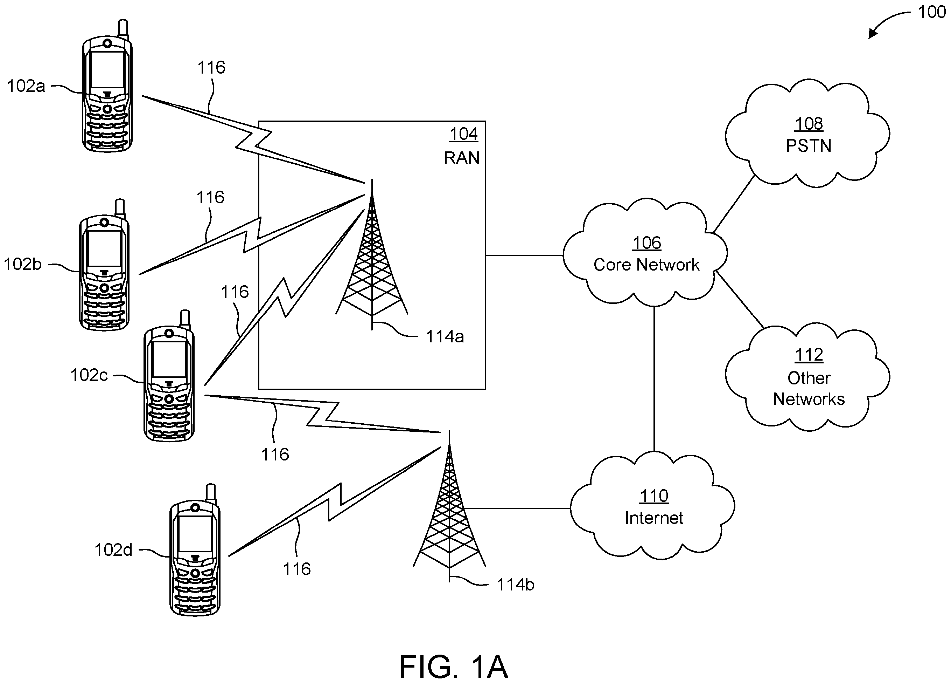

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

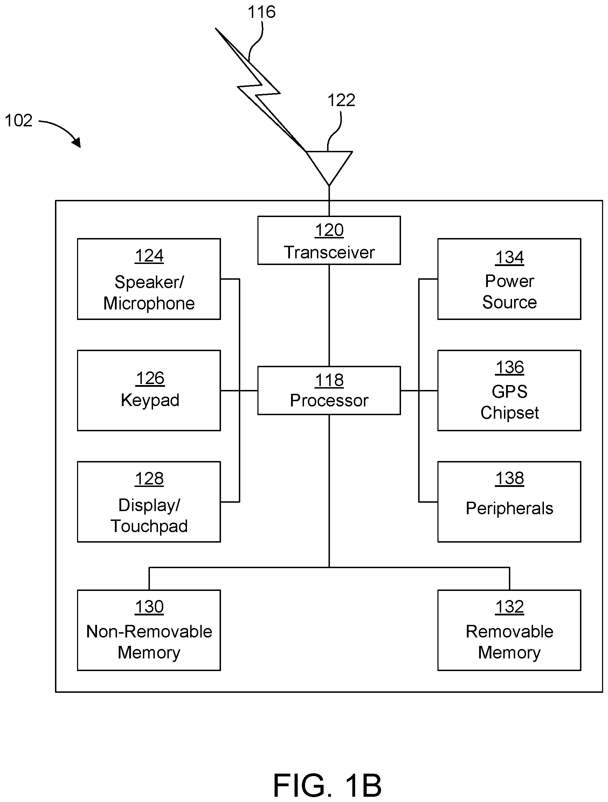

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include ahalf-duplex radio for which transmission and reception of some or all of the signals (e.g., associated with particular subframes for either the uplink (e.g., for transmission) or the downlink (e.g., for reception)).

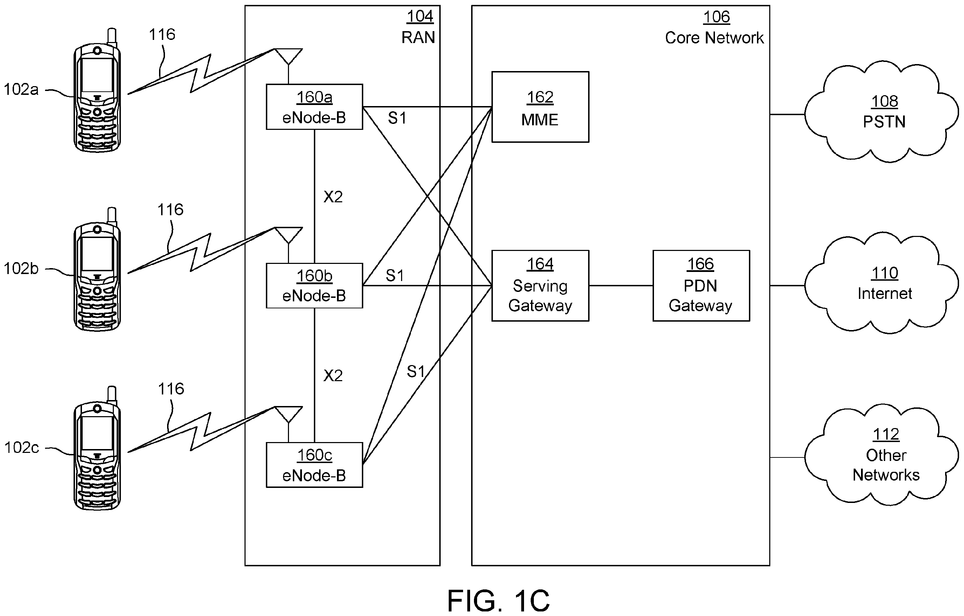

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11 ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

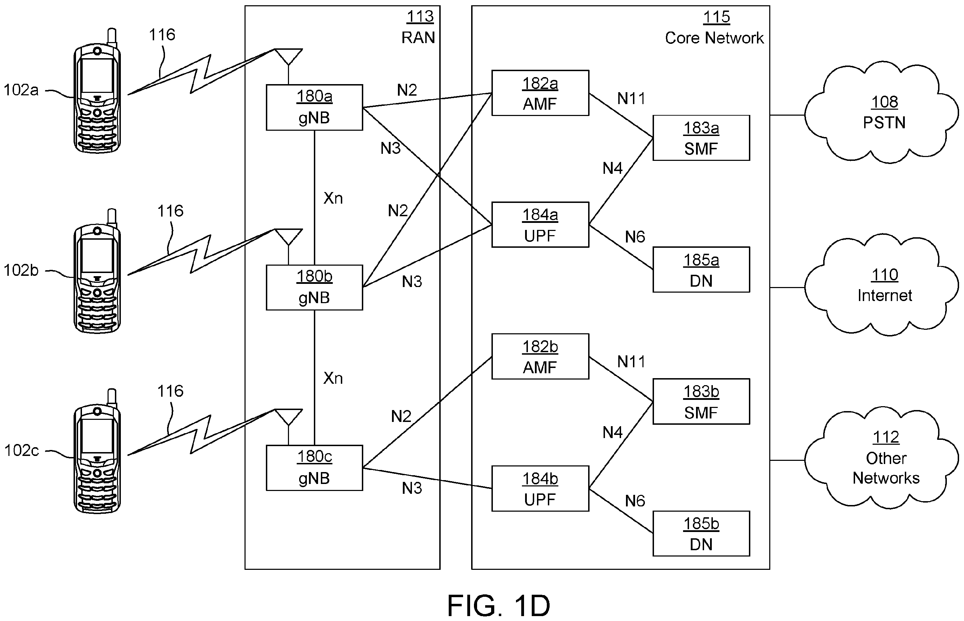

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Introduction

The number of Unmanned Aerial Vehicles (UAV), often called drones, has been rapidly growing in recent years and the applications enabled by UAV are expanding into a wide variety of industries. However, conventional Unmanned Aerial Systems (UASs), i.e. UAV and controller, mostly rely on direct point-to-point communication via the unlicensed Industrial, Scientific and Medical (ISM) radio bands, which limits the range of operation, and the communication is typically unreliable, insecure and with low data rates. To further unleash the potential of UAV applications, advanced cellular technologies such as Long-Term Evolution (LTE) and 5G may be utilized to enable Beyond Visual Line of Sight (BVLOS) operation and higher performance and more reliable communication for UAS.

Ubiquitous mobile network coverage can provide an operation range that is far beyond that limited by the point-to-point communication using ISM frequencies. Advanced communication capabilities, such as high bandwidth, low latency, guaranteed QoS, etc., of modern cellular networks (especially 5G network) can help improve the performance of UAV applications. Advanced security mechanisms of modem cellular networks can address security concerns involved in managing UAV applications.

### Overview

In addition to primary authentication and authorization by the 3GPP system, Unmanned Aerial Vehicle (UAV) and Unmanned Aerial Vehicle Controller (UAV-C) devices are required to be authenticated and authorized by the UAS Service Supplier/UAS Traffic Management (USS/UTM) with the support of the 3GPP system. This extra authentication and authorization procedure is referred to as USS UAV Authentication & Authorization (UUAA).

In a 5G System (5GS), UUAA may be performed either during 5GS Registration procedure or during PDU Session establishment procedure.

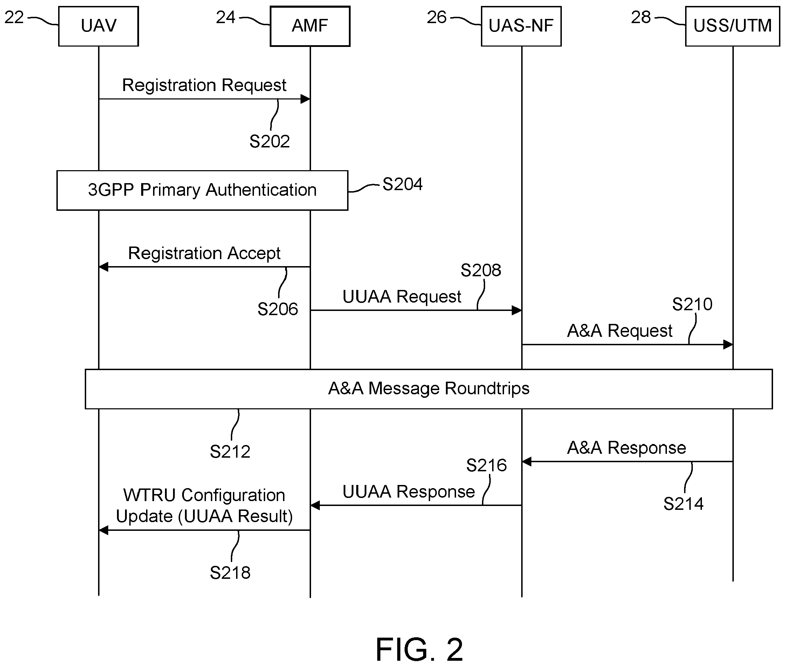

FIG. 2 illustrates a high-level UUAA procedure during 5GS Registration. If a UE 22, (i.e. UAV) intends to use UAV related services, it may send, in step S202 a Registration request to the AMF 24 to indicate its support for UAV services and include its Civil Aviation Administration (CAA) level UAV Identifier. Upon successful primary 3GPP Authentication and Authorization (A&A), in step S204, the AMF 24 may, in step S206, send a registration accept message to the UE 22, indicating that UUAA is pending. The AMF 24 may then trigger the UUAA procedure based on the information received in the Registration request and other information such as UE subscription information and local policies. The AMF 24 may request the UUAA service of the USS/UTM 28 by sending, in step S208, the request to a UAS Network Function 26 (UAS-NF). The UAS-NF 26 is a 3GPP network function that interfaces with the USS/UTM 28 for UAV related procedures such as UUAA and UAV tracking; it can for example be co-located with a Network Exposure Function (NEF) or a Service Capability Exposure Function (SCEF). The UAS-NF 26 discovers the USS/UTM 28 address based on pre-configured address information or the CAA-level UAV ID sent by the UE 22. The USS/UTM 28 address may alternatively be provided by the UE 22. In step S210, the UAS-NF 26 invokes the API provided by the USS/UTM 28 and provides necessary information, such as CAA-level UAV ID, 3GPP UAV ID (e.g., Generic Public Subscription Identifier, GPSI), to request the UUAA service, "A&A request". In step S212, the USS/UTM 28 may further exchange information with the UAV or UAV-C through the UAS-NF 26 and 3GPP network to complete UUAA, "A&A message roundtrips". In step S214, the USS/UTM 28 informs the UAS-NF 26 about the UUAA results, "A&A response", and in turn, in step S216, the UAS-NF 26 informs the AMF 24, "UUAA response". A new CAA-level UAV ID may be allocated by the USS/UTM 28 as a result of successful UUAA, stored in the UAS-NF 26 and the AMF 24, and provided, "UE Configuration Update (UUAA result)", to the UE 22 in step S218. The USS/UTM 28 may provide the UAV 22 with security information that the UAV 22 may use to establish secure communication with the USS/UTM 28.

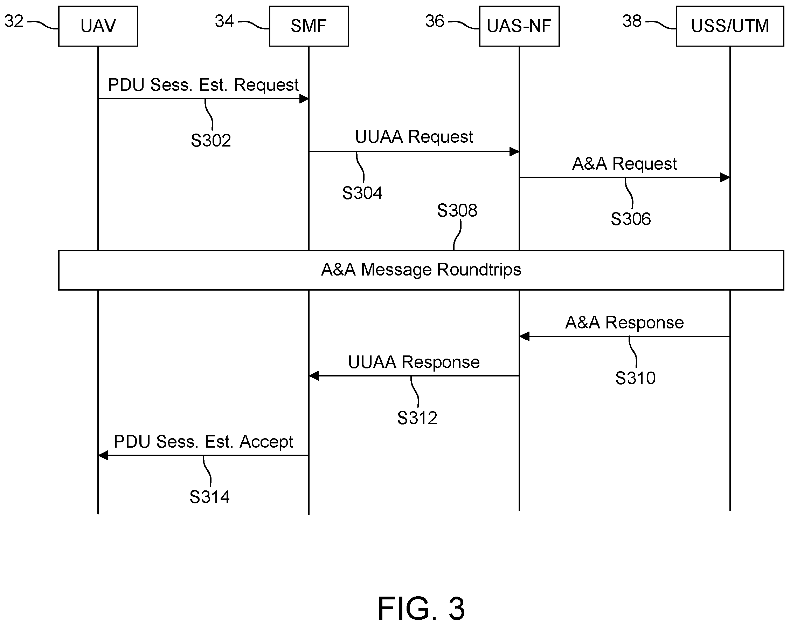

If the UUAA is not performed during the 5GS Registration, the UUAA procedure may alternatively be triggered during the establishment of the PDU Session related to UAV operations, as illustrated in FIG. 3. In this case, in step S302, the UE 32 (i.e. UAV or UAV-C) includes its CAA-level UAV ID in the PDU Session establishment request that is sent to the SMF 34. Based on the received information, such as the CAA-level UAV ID, the DNN/NSSAI that corresponds to UAV related service, and other information (e.g., subscription information), the SMF initiates, in step S304, the UUAA request with the UAS-NF 36 that, in step S306, forwards the A&A request to the USS/UTM 38. The rest of the procedure is similar to the UUAA during Registration: the A&A message roundtrips in step 308, the A&A response in step S310, the UUAA response in step S312 can be the same as described with reference to FIG. 2 and in step S314, the UUAA result is sent by the SMF to the UAV in a PDU session establishment accept message.

In an Evolved Packet System (EPS), the UUAA procedure is performed during the Attach/PDN Connectivity establishment procedure. UAV related information may be included in the Protocol Configuration Option (PCO) of the EPS Session Management (ESM) Container in the Attach Request. The MME may select the Access Point Name (APN) and the Packet Data Network Gateway (PGW) (or PGW-C+SMF) corresponding to the UAV service based on UE subscription information (such as "Aerial UE Information"). The PGW determines that the secondary A&A by USS/UTM is required and initiates the UUAA request via the UAS-NF. The UUAA result is informed to the UAS-NF and PGW (or PGW-C+SMF).

UAV related connection (PDU Session or PDN Connection) can only be established after the UAV or UAV-C has successfully completed UUAA. An UAV or UAV-C may establish a single common connection for both general communication with USS/UTM (e.g., sending UAV tracking data, such as network Remote ID, or receiving USS/UTM configuration information) and C2 communication with the UAV-C; or it may use a dedicated connection for general communication with the USS/UTM and another separate connection for C2 communication with the UAV-C.

To enable C2 communication with the UAV-C, the UAV needs to be authorized by the USS/UTM for the pairing with the UAV-C. In a single-connection case, the pairing authorization may be performed together with the UUAA procedure during the connection establishment procedure or may be initiated later using a connection modification procedure. In a separate-connection case, the pairing authorization may be performed during the connection establishment dedicated to UAV - UAV-C C2 communication. The pairing information (e.g., the peer CAA-level UAV identifier) may be provided by the UAV or pre-configured in the USS/UTM. If the pairing authorization is successful, the USS/UTM may provide traffic routing policies or filters for the C2 communication to the 3GPP system so the 3GPP system can enforce these policies/filters to ensure that the connection only allows the C2 communication between the UAV and the UAV-C. Similarly, to UUAA, the USS/UTM may provide the UAV via the network with a new CAA-level UAV ID and security information that the UAV may use to establish secure communication with the UAV-C.

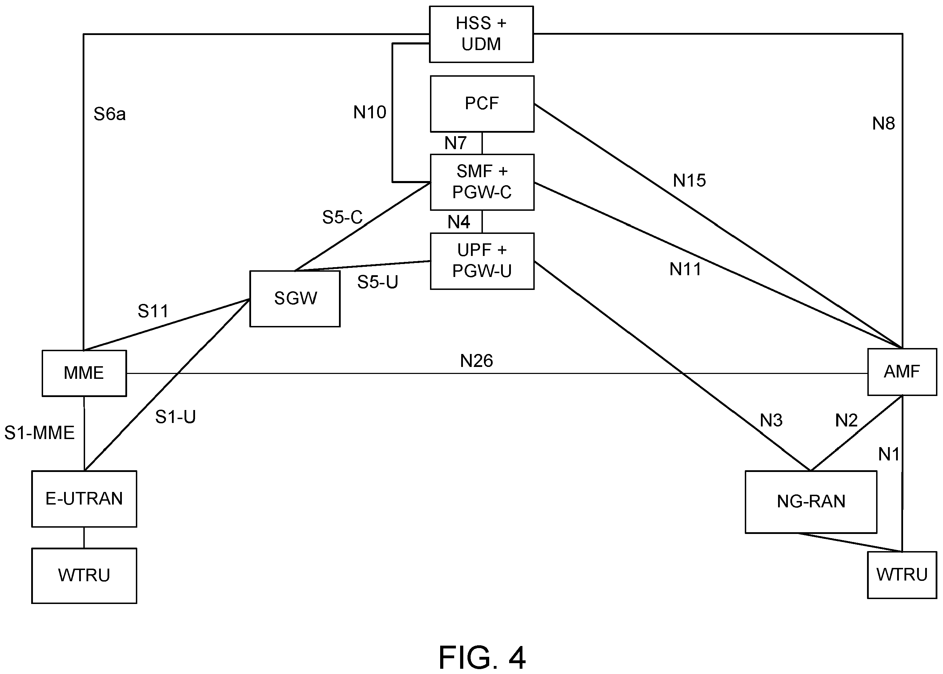

FIG. 4 illustrates a system architecture for interworking between 5GS and EPS, including Home Subscriber Server (HSS)+ Unified Data Management (UDM), Policy Control Function (PCF), SMF+PGW-C, UPF+PGW-U, SGW, MME, E-UTRAN, AMF, NG-RAN and UEs on both sides. In addition, interfaces between different parts are indicated.

Combined entities, such as SMF+PGW-C, UPF+PGW-U, etc., support similar functionalities in 5GS and EPS respectively and enable the interworking between them. The N26 interface between AMF and MME is an optional interface that enables the AMF and MME to exchange information such as UE context.

A UE can operate in Single Registration (SR) mode or Dual Registration (DR) mode between 5GS and EPS. In SR mode, the UE maintains a single coordinated registration for 5GS and EPS, while in DR mode the UE handles independent registration for 5GS and EPS.

Now, when a UAV or UAV-C which has been authenticated and authorized by USS/UTM in 5GS, moves from the 5GS to the EPS (without N26 interface), either in IDLE mode or Connected mode, it may get re-authenticated by the USS/UTM in the EPS. When the UAV or UAV-C returns from the EPS to the 5GS, the 5GS may still maintain the old UUAA context (e.g., in the AMF). For example, if a UAV failed UUAA (e.g., after re-authentication) in the EPS and returns to the 5GS, the 5GS may still consider it properly authenticated by the USS/UTM according to the now obsolete UUAA context and allow the UAV to establish connections for UAV communication, which in this case should not be allowed. As another example, the UAV may be allocated a new CAA-level UAV ID (e.g., when it was re-authenticated by the USS/UTM or at any time in the EPS), but after it returns to the 5GS, the 5GS system may still use the obsolete CAA-level UAV ID (e.g., stored from previous UUAA) which can cause problems in UAV-related procedures that use the CAA-level UAV ID such as pairing authorization and/or request for UAS connectivity (e.g., with USS/UTM and/or UAV-C), tracking, etc. In the case of UAV tracking, when reporting the location of a UAV to a USS/UTM (e.g., from a set of UAVs in a given location area), the 3GPP system may provide an inconsistent (e.g., different) CAA-level UAV ID depending on whether the UAV is connected via EPS or 5GS. When requesting UAS services from 5GS (e.g., during pairing authorization), the UAV may provide the network with its current CAA-level UAV ID (e.g., newly assigned by USS/UTM while it was in EPS) which may be rejected by the 5GS in case of a mismatch with the value in the 5GS UUAA context. The similar issue may also occur in the reverse scenario, when a UAV is re-authenticated or assigned a new CAA by the USS/UTM in the 5GS while the EPS maintains the obsolete UUAA context.

Additionally, if a UAV was authenticated and authorized by the USS/UTM in 5GS via the UUAA-MM procedure (i.e. a UUAA procedure optionally performed during 5GS registration) and then moves to an EPS system, the EPS system does not have any UUAA context for the UAV and does not know which PDU Sessions are associated with the UAS service.

It can thus be desired to address these potential UUAA context consistency issues and provide methods to allow the 5GS to sync up with the UUAA context with the EPS.

Further, if a UAV or UAV-C has established PDU Sessions for UAV communication in the 5GS, these PDU Sessions will be transferred to the EPS as the PDN Connections/EPS bearers when it moves from the 5GS to the EPS (with N26 interface). However, the MME is not aware that the transferred PDN Connections/EPS bearers are related to UAV service. This will allow the UAV or the UAV-C to continue the UAV communication without allowing the USS/UTM to re-authenticate or revoke pairing/C2 communication authorization of UAV in in the EPS. In some cases, USS/UTM re-authentication/re-authorization may be necessary or even mandatory per regulatory requirements, especially when the UE is in IDLE mode and the service continuity is not a concern. Normally, the UUAA procedure in EPS is triggered during the PDN Connection establishment. But in this case, the UAV PDN Connection is already transferred from the 5GS PDU Sessions and there is no need for the UAV to initiate the PDN Connection establishment.

It can thus be desired to enable re-authentication/re-authorization or revocation of pairing/C2 communication by USS/UTM in this scenario (i.e. transfer of PDU Session used for UAS service transferred for 5GS to EPS as PDN Connections/EPS bearers).

In addition, the AMF serving the UAV may change (e.g. during a mobility registration). In this case, the UAS-NF needs to locate the correct AMF for procedures initiated by the USS/UTM (e.g., UAV location tracking and authorization revocation).

It can thus be desired to inform the UAS-NF about a new AMF serving the UAV.

### UUAA context alignment between 5GS and EPS

In an embodiment, the UE indicates its most recent UUAA status when moving to a different system (e.g. 5GS or EPS), as will be described.

When a UE (e.g. UAV or UAV-C) completes USS/UTM authentication and authorization or re-authentication and re-authorization in 5GS or EPS, besides the normal UUAA context information such as UUAA status (successfully authenticated/authorized or not) and CAA-level UAV ID, the UE may also store the type of system (e.g. EPS or 5GS) in which it was most recently authenticated and authorized by the USS/UTM and a timestamp indicating when the most recent UUAA was completed. When the UE moves from one system to another system due to mobility, it may indicate this information (e.g. the type of system and timestamp of its recent UUAA) to the new system so that the new system can use this information to determine whether to initiate USS/UTM re-authentication & re-authorization or to retrieve the UUAA context from the previous system and to continue to use the UUAA context in the new system. This information may also help the new system to discard and avoid using any obsolete UUAA context that it may maintain. In the case of UAV re-authentication by USS/UTM, the current system (e.g., 5GS) may detect that the UAV has already been authenticated by USS/UTM on the previous system based on the UE provided system type (e.g., EPS) and may decide to trigger a fast re-authentication procedure of the UAV by the USS/UTM, whereby the UAV may use its most recent CAA level UAV ID (e.g., as re-authentication identity) and the security information (e.g., includes a re-authentication key) provided by the USS/UTM from the previous UUAA procedure (as previously described) instead of performing a full authentication procedure (e.g., using a certificate associated with a long term UAV Identifier).

Example 1: a UAV is authenticated and authorized by USS/UTM in the EPS and has established PDN Connections for UAV communication in EPS, it moves from the EPS to the 5GS in IDLE mode and there is N26 interface between the EPS MME and the 5GS AMF. The UAV follows the procedure specified in Clause 4.11.1.3.3 of TS 23.502 to register in the 5GS and transfer the PDN connections for UAV communication to the PDU Sessions in the 5GS. However, the AMF may not have any UUAA context at all or it may have an obsolete UUAA context from a previous UUAA procedure in the 5GS. The AMF may not be aware that the PDU Sessions transferred from the EPS PDN Connections are for UAV communication. In this case, the UAV may indicate in the 5GS Registration request message that it was most recently authenticated and authorized by USS/UTM in the EPS, the timestamp the UUAA was completed, the CAA-level ID that may result from the previous UUAA procedure in the EPS, etc. Upon this information, the AMF may:
- Discard any obsolete UUAA context that it possesses or retrieves from the old AMF.
- Determine from the EPS UE context received from the MME which PDN Connections/EPS bearers are related to UAV communication, and the related serving PGW-C+SMF address.
- Retrieve the EPS UUAA context from the PGW-C+SMF.
- Determine whether to trigger a new UUAA procedure in the 5GS based on the network policy and regulatory requirements.

In case the AMF determines to trigger a new UUAA procedure in the 5GS, a possibility is not to transfer the PDN Connections for UAV communication to the 5GS; another possibility is to transfer the PDN Connections for UAV communication to the 5GS PDU Sessions, but instruct the SMF/UPF to suspend these PDU Sessions until the USS/UTM re-authentication/re-authorization is successful. The AMF can also discard the UUAA context info received from the UE or from the PGW-C+SMF.

In case the AMF determines not to trigger a new UUAA procedure in the 5GS, it may store the UUAA context info received from the UE and from the PGW-C+SMF, and may use this UUAA context info for future UAV related procedures.

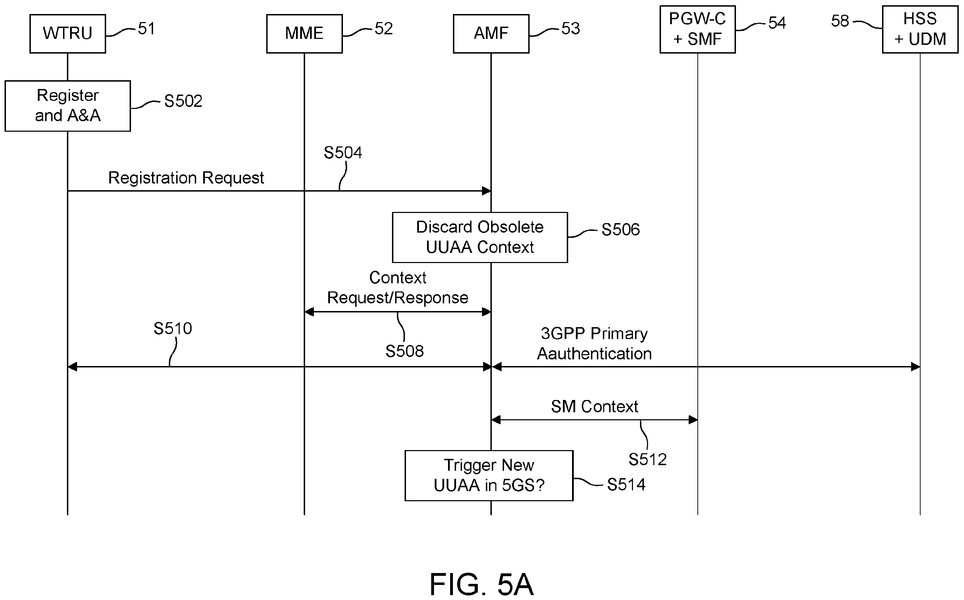

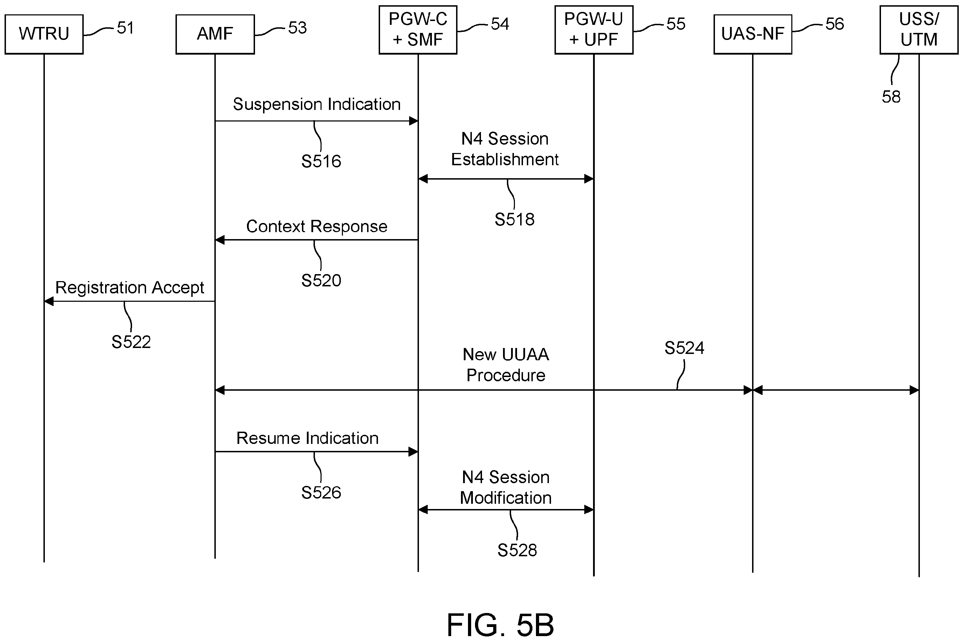

FIGS. 5A and 5B illustrate UUAA context alignment in case of UE mobility from EPS to 5GS according to an embodiment of the present principles in which there is a N26 interface between the EPS and 5GS.

In step S502, the UE (e.g. UAV or UAV-C) 52 registers in EPS and is USS/UTM authenticated and authorized. The UE 51 stores the UUAA context (UUAA status, CAA-level UAV ID, timestamp of the recent UUAA completion, etc.) resulting from the UUAA in EPS. The UE 51 may also establish PDN Connections/EPS bearers in the EPS for UAV communication.

In step S504, upon moving to the 5GS in IDLE mode the UE initiates the Registration procedure with the AMF 53 in 5GS by sending a Registration request. The Registration request may include a EPS UUAA indication indicating that the UE has been recently authenticated/authorized by the USS/UTM 58 via EPS, the CAA-level UAV ID obtained from the USS/UTM 58 while it was in EPS, and the timestamp of the previous, recent UUAA completion.

In step S506, the AMF 53 that receives the 5GS Registration request may have previously served the UE 51 and may maintain the UE context including the UUAA context. The AMF 53 may be able to retrieve the UE context from some other AMF (not shown in the figure). If the UE indicates in the Registration request that it has been USS/UTM authenticated/authorized in EPS, the AMF 53 discards the old UUAA context that it may have for the UE.

In step S508, the AMF 53 retrieves the UE's EPS Mobility Management (MM) context from the MME 52 in the EPS. The received EPS MM context may include the bearer context of the PDN connections/EPS bearers that were used for UAV communications, and the bearer context may include an indication that the PDN connections/EPS bearer is for UAV communication.

In step S510, 3GPP primary authentication is performed by the UE 51, the AMF 53 and the HSS + UDM 57. The following steps in FIGS. 5A and 5B assume successful UE authentication and authorization in 5GS.

In case the received bearer context in step S508 indicates that the PDN connection/EPS bearer is for UAV communication, in step S512, the AMF 53 may locate the PGW-C+SMF 54 and retrieve the Session Management (SM) context of the PDN connection/EPS bearers (Nsmf_PDUSession_ContextRequest). The SM context may contain the UAV related context information including the UUAA context.

In step S514, the AMF 53 determines whether to initiate re-authentication/re-authorization by USS/UTM in 5GS considering at least one of a number of factors:
a: the operator policy or local regulation may require the UAV or UAV-C to be re-authenticated and re-authorized when the serving network/system changes.
b: in case the timestamp of the recent (e.g. previous) UUAA completion indicates that the period since the last UUAA exceeds certain threshold, the AMF 53 may decide to initiate new UUAA.
c: in case the UUAA context received from the PGW-C+SMF in step S512 is not consistent with the context received from the UE 51 in step S504, the AMF 53 may decide to initiate new UUAA.
d: in case there is no UAV-related PDN connection to be transferred to the 5GS (i.e. the bearer context received in step S508 indicates that there is no UAV-related PDN connection), the AMF 53 may decide to initiate new UUAA.

In case the AMF 53 determines to initiate new UUAA in the 5GS, it may have two options in handling UAV-related PDN connections if any exist:
Option 1: the AMF 53 may determine not to transfer the PDN connections to the 5GS. In this case, steps S516-S520, S526 and S528 can be skipped.
Option 2: the AMF 53 may transfer the PDN connections to the 5GS PDU Sessions but may instruct the SMF 54/UPF 55 to suspend the data transmission over these PDU Sessions until a new UUAA is successfully completed.

In case option 2 is used, the AMF 53 indicates, in step S516, to the SMF 54 that the PDU Session is suspended (Nsmf_PDUSession_CreateSMContext), i.e. the data transmission is not allowed over these PDU Sessions. In step S518, the SMF 54 establishes a N4 session with the UPF 55 for the PDU Session and instructs it to suspend data transmission. In step S520, the SMF 54 returns a context response (Nsmf_PDUSession_ContextResponse) to the AMF 53.

In step S522, the AMF 53 returns the Registration Accept to the UE 51.

In step S524, the AMF 53 initiates the new UUAA procedure with the USS/UTM 58 via the UAS-NF 56. The CAA-level UAV ID and other security info resulted from previous EPS UUAA procedure may be used to enable a fast re-authentication/re-authorization by the USS/UTM.

In case the re-authentication/re-authorization by the USS/UTM 58 is successful and there are suspended UAV-related PDU Sessions (transferred from EPS PDN connections), in step S526, the AMF 53 informs the SMF 54 to resume the PDU Sessions (i.e. allow the data transmission over those PDU Sessions) and, in step S528, the SMF 54 forwards this information to the UPF 55, "N4 session modification". If the re-authentication and re-authorization by the USS/UTM 58 fails, the AMF 53 should initiate release of those PDU Sessions. The AMF 53 may also send the new UUAA context information to the SMF 54 that stores the new UUAA context or replace the old UUAA context with the new one received from the AMF 53.

Example 2: an UE is authenticated and authorized by USS/UTM in the EPS, has established PDN Connections for UAV communication in EPS, and moves from the EPS to the 5GS in IDLE mode. There is no N26 interface between the EPS MME and the 5GS AMF. Similar to example 1, based on indication received from the UAV, the AMF may trigger USS/UTM re-authentication/re-authorization during the Registration procedure. Additionally, the AMF may determine not to trigger USS/UTM re-authentication/re-authorization but may inform the SMF that the UAV is subject to the re-authentication/re-authorization by the USS/UTM. And the SMF may trigger the UUAA procedure when the UAV requests to establish the PDU Sessions for UAV communication.

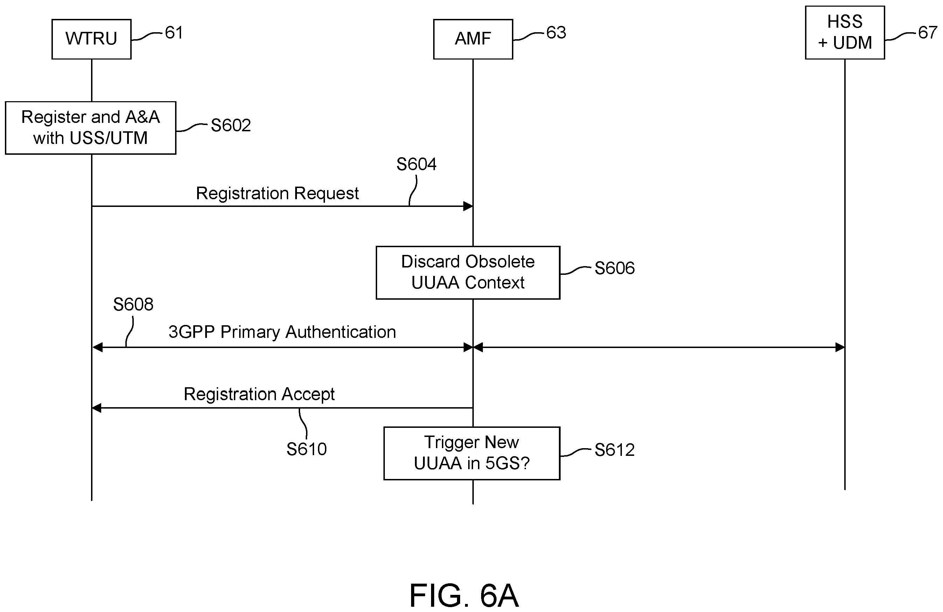

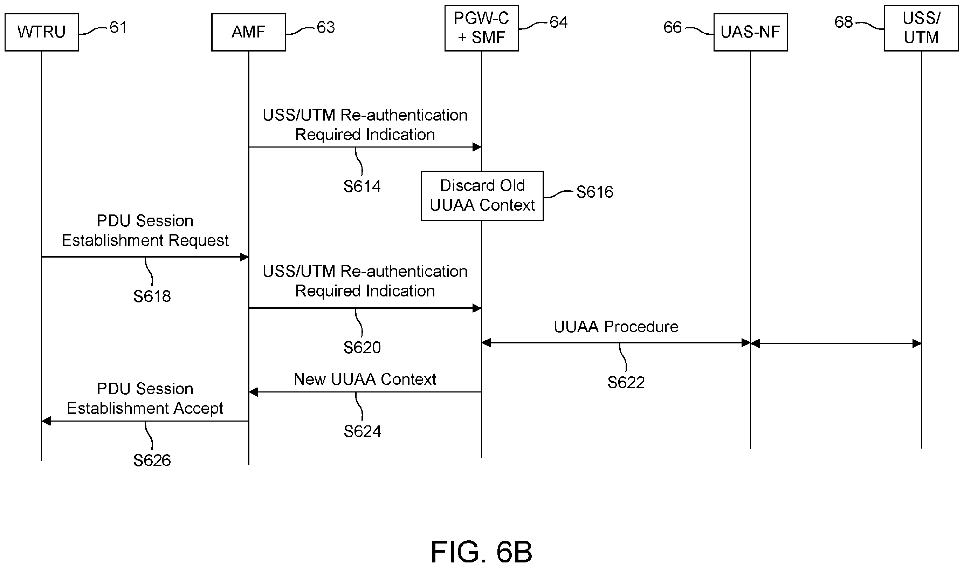

FIGS. 6A and 6B illustrate UUAA context alignment in case of UE mobility from EPS to 5GS according to an embodiment of the present principles in which there is no N26 interface between the EPS and 5GS.

In step S602, the UE 61 (UAV or UAV-C) is registered in EPS and authenticated and authorized by the USS/UTM 68. The UE 61 stores the UUAA context (UUAA status, CAA-level UAV ID, timestamp of the recent UUAA completion, etc.) resulting from the UUAA in EPS. The UE 61 may also have established PDN Connections/EPS bearers in the EPS for UAV communication.

Upon UE movement to the 5GS in IDLE mode, in step S604, the UE 61 initiates the Registration procedure with the AMF 63 in 5GS by sending a Registration request that can include an EPS UUAA indication indicating that the UE, e.g. recently, has been authenticated/authorized by the USS/UTM (68 in FIG. 6B) via EPS, the CAA-level UAV ID obtained from the USS/UTM 68 while it was in EPS, and the timestamp of the recent UUAA completion. If the UE 61 is working in Dual-Registration mode, it may maintain a separate context (including the UUAA context resulting from previous UUAA in 5GS) for 5GS and the UE 61 should use the EPS UUAA context instead of the old 5GS UUAA context that is obsolete since it is not the most recent UUAA context.

In case the UE 61 is working in Dual-Registration mode, it may maintain a separate context (including the UUAA context resulted from the previous UUAA in 5GS) for 5GS and the UE should use the EPS UUAA context instead of the old 5GS UUAA context. UEs operating in Dual registration mode may perform 5GS registration before moving from EPS to 5GS. If the UE has performed UUAA procedure in the EPS, the UE may include "EPS UUAA indication" in the Registration Request to 5GS. If the UE has not registered with 5GS before moving to 5GS, it may perform a registration request with 'handover' indication at the time of moving to 5GS. The UE may also include the "EPS UUAA indication" as described.

The AMF 63 that receives the 5GS Registration request may have previously served the UE and may maintains the UE context including the UUAA context, or the AMF 63 may be able to retrieve the UE context from some other AMF (not shown in the figure). If the UE 61 indicates in the Registration request that it has been USS/UTM authenticated/authorized in EPS, in step S606, the AMF 63 should discard the old UUAA context that it may have.

In step S608, the UE 61 is authenticated and authorized in 5G Core (5GC), e.g. using 3GPP primary authentication. In the rest of FIGS. 6A and 6B, it is assumed that the authentication and authorization are successful.

In step S610, the AMF 63 returns the Registration Accept to the UE 61.

In step S612, the AMF 63 determines whether to initiate re-authentication/re-authorization by the USS/UTM 68 in 5GS considering for example at least one factor described with reference to Example 1.

In case the AMF 63 determines that the UE 61 should be re-authenticated by the USS/UTM 68, the AFM 63 may, in step S614, inform the PGW-C+SMF 64 that the UE 61 is subjected to re-authentication/re-authorization by the USS/UTM 68. The AMF 63 may also forward the new CAA-level UAV ID received from the UE 61 to the SMF 64. Alternatively, the AMF 63 may send this indication, i.e. that the UE is subject to re-authentication, together with the Nsmf_PDUSession_CreateSMContext request (see step S620) during the PDU Session establishment.

In case the PGW-C+SMF 64 received the indication from the AMF 63 as described in Step S614, the PGW-C+SMF 64 should, in step S616, discard the old UUAA context information that it may have.

In step S618, the UE 61 sends a PDU Session Establishment request to the AMF 63 to initiate the PDU Session Establishment procedure in order to transfer the PDN Connections established in EPS for UAV communication. In the dual registration mode, the UE may perform PDN connection transfer from EPC to 5Gs with 'handover' indication. While transferring the PDN connection to the PDU session, the UE may include an indication "EPS UUAA SM indication" in the PDU session request message.

In step S620, the AMF 63 indicates that USS/UTM re-authentication is required by sending a Nsmf_PDUSession_CreateSMContext request to the PGW-C+SMF 64. As mentioned, the AMF 63 may include the indication that the re-authentication/re-authorization by USS/UTM 68 is required and the CAA-level UAV ID received from the UE.

Based on this indication, the PGW-C+SMF 64 may, in step S622, reinitiate the UUAA procedure. The PGW-C+SMF 64 receives the UUAA result and other UUAA context (e.g. new CAA-level UAV ID) from the USS/UTM 68.

In step S624, the PGW-C+SMF 64 forwards the new UUAA context to the AMF 63 in a Nsmf_PDUSession_CreateSMContext response.

In step S626, the AMF 63 forwards the PDU Session Establishment Accept message and the new UUAA context to the UE 61.

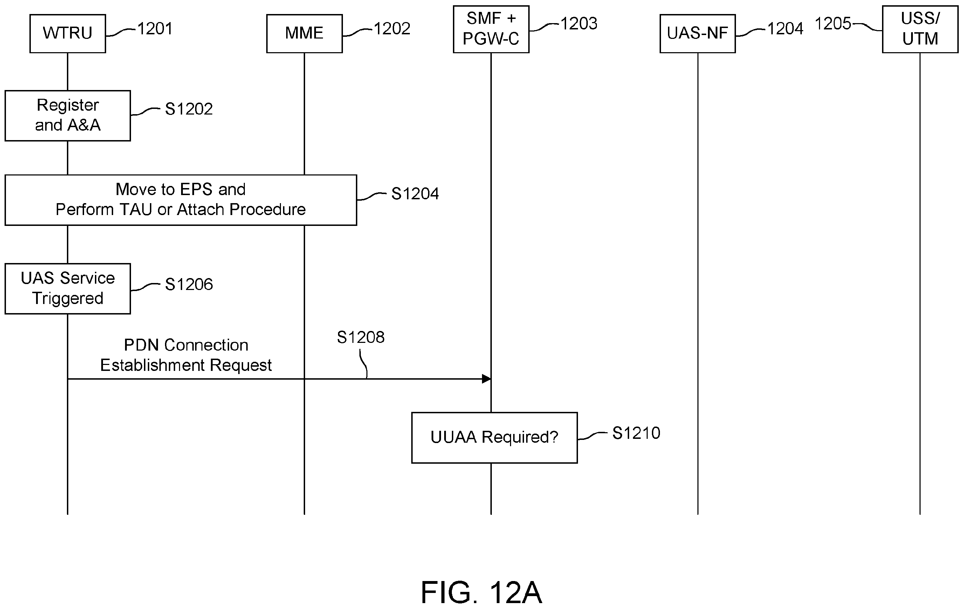

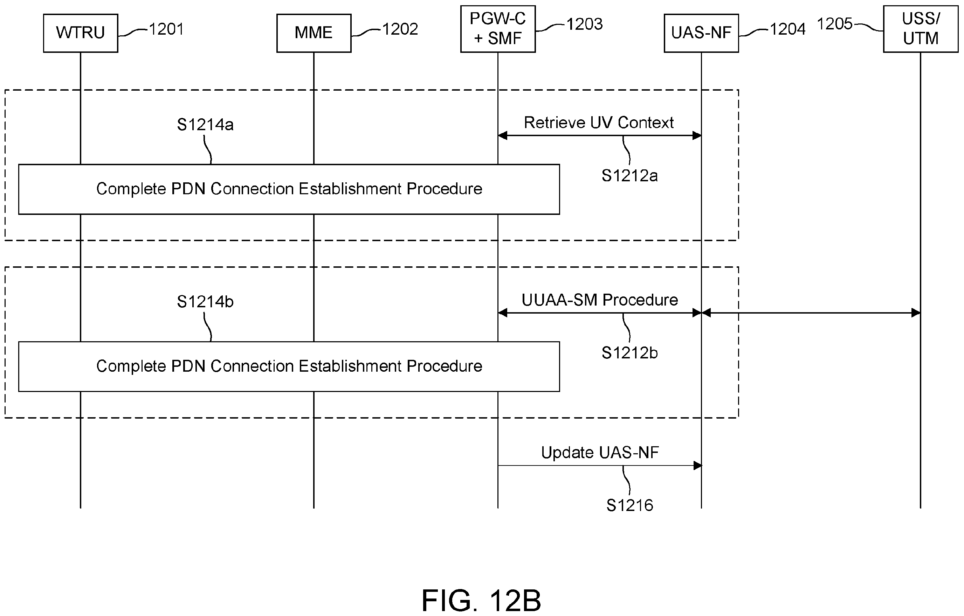

Example 3: a method of UUAA context alignment in case of UE mobility from 5GS to EPS is illustrated in FIGS. 12A and 12B. A UE (UAV or UAV-C) 1201 has registered and been authenticated and authorized by USS/UTM 1205 in the 5GS via a UUAA-MM procedure (i.e. during 5GS registration) in step S1202. In step S1204, the UE moves from the 5GS to the EPS in IDLE mode and performs a TAU or Attach procedure.

If the UE has not established the PDU Sessions related to UAS service in the 5GS, or the 5GS has determined not to transfer the PDU Sessions related to UAS service to EPS, when the UAS service is triggered, in step S1206, the UE needs to establish PDN connections for UAS service. In step S1208, the UE sends a PDN Connection establishment request for UAS service to the SMF+PGW-C 1203, in which the UE may indicate that it has already been authenticated and authorized by the USS/UTM in the 5GS and also provide other UAV context information such as UAV identifiers (e.g. CAA-Level UAV ID, the timestamp of the previous UUAA success).

Upon receiving the PDN connection request and the aforementioned indication, the SMF+PGW-C function may, in step S1210, based on network policy or other condition(s) (e.g. whether the time elapsed from the previous UUAA is longer than a threshold), determine whether or not a UUAA procedure is required (i.e. to skip or initiate the UUAA procedure) regardless of the fact that the UAV has already been authenticated and authorized.

In case the SMF+PGW-C 1203 determines to skip the UUAA procedure (i.e. no UUAA required in step S1210), the SMF+PGW-C may, in step S1212a, retrieve the UUAA context information from the UAS-NF 1204. The SMF+PGW-C may compare the context information retrieved from the UAS-NF with the context information provided by the UAV. In case of a match, the SMF+PGW-C completes the PDN Connection establishment procedure, in step S1214a.

However, in case of a mismatch, the SMF+PGW-C may discard the context information and initiate, in step S1212b, a new UUAA procedure, "UUAA-SM procedure" after which it, in step S1214b, completes the PDN Connection establishment procedure.

In case the SMF+PGW-C determines not to skip the UUAA procedure (i.e. UUAA required in step S1210), i.e. that a UUAA procedure is required, it may, in step S1212b, initiate a new UUAA procedure, "UUAA-SM procedure" after which it, in step S1214b, completes the PDN Connection establishment procedure.

In any case, the SMF+PGW-C may, in step S1216, update the UAS-NF that it is now the serving function for the UAV and that future requests from the USS/UTM 1205, such as UUAA re-authentication and revocation, should be directed towards the SMF+PGW-C.

### UAS-NF as a common interworking function for shared UE context management

Another solution is to use the UAS-NF as a common function for the architecture for interworking between 5GS and EPC/E-UTRAN. The UAS-NF can maintain a UAV context (e.g., includes a UUAA context) on behalf of the 5GC and EPC. The UAV context includes the most up-to-date CAA-level UAV ID, 3GPP UAV ID, information about the anchor network functions (e.g., AMF, SMF or MME, PGW) serving the UE, information about the USS/UTM serving the UAV (e.g., FQDN), C2 and pairing authorization information (e.g., whether authorized for pairing/C2 communication, peer UAV-C information). Various methods will now be described.

When the UE performs UUAA, UAS-NF associates the UE's serving anchor function, including system type (AMF, SMF or MME, PGW) with the UAV context. When UUAA completes successfully, the UAS-NF receives from the USS/UTM the UUAA result including the new CAA level UAV ID which the UAS-NF stores into the UAV context, along with USS/UTM address. The UAS-NF may resolve the address of USS/UTM based on CAA-level UAV ID during UUAA and store the USS/UTM address in the UAV context.

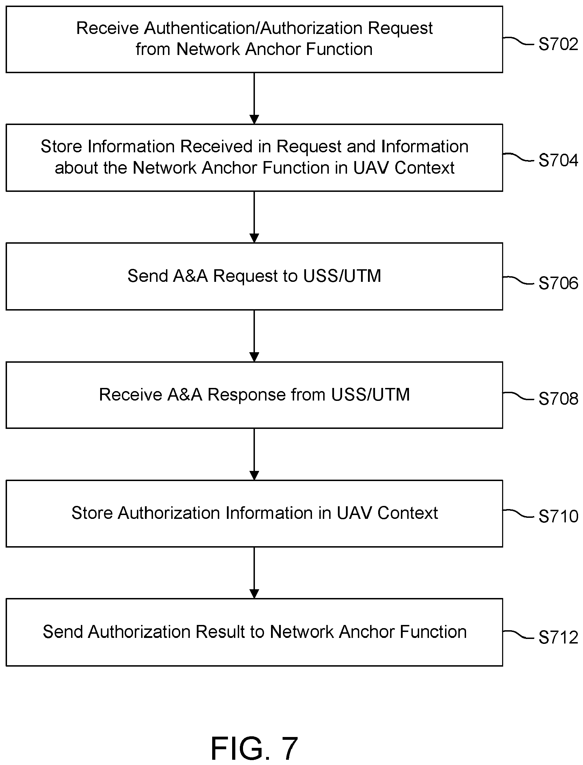

FIG. 7 illustrates a method of UAS-NF establishment of UAV context during UUAA according to an embodiment of the present principles.

In step S702, the UAS-NF receives an authentication/authorization request message from a network anchor function (e.g. AMF or SMF/PGW-C). The request message can include a CAA-level UAV ID, 3GPP UAV ID, and information about the USS/UTM serving the UE.

In step S704, the UAS-NF stores information received in the request message and information about the network anchor function (e.g. including system type: EPS or 5GS) in a UAV context.

In step S706, the UAS-NF sends an authentication/authorization request message to the USS/UTM. The request message can include the CAA-level UAV ID and the 3GPP UAV ID.

In step S708, the UAS-NF receives an authentication/authorization response message from the USS/UTM. The message can include the 3GPP UAV ID and authorization results including a new CAA-level UAV ID, authorization information for UAS communications (e.g. peer UAV-C MAC/IP address, C2 QoS parameters).

In step S710, the UAS-NF stores the authorization information received from the USS/UTM in the UAV context.

In step S712, the UAS-NF sends the authorization results to the network anchor function.

During UAV re-authentication by USS/UTM or if a new CAA level UAV ID is assigned by USS/UTM, the UAS-NF updates the UAV context accordingly (e.g., store new CAA level UAV ID). During a UAV-C replacement by USS/UTM the UAS-NF informs the appropriate anchor function (e.g., SMF/PCF) and updates the peer UAV-C information in the UAV context.

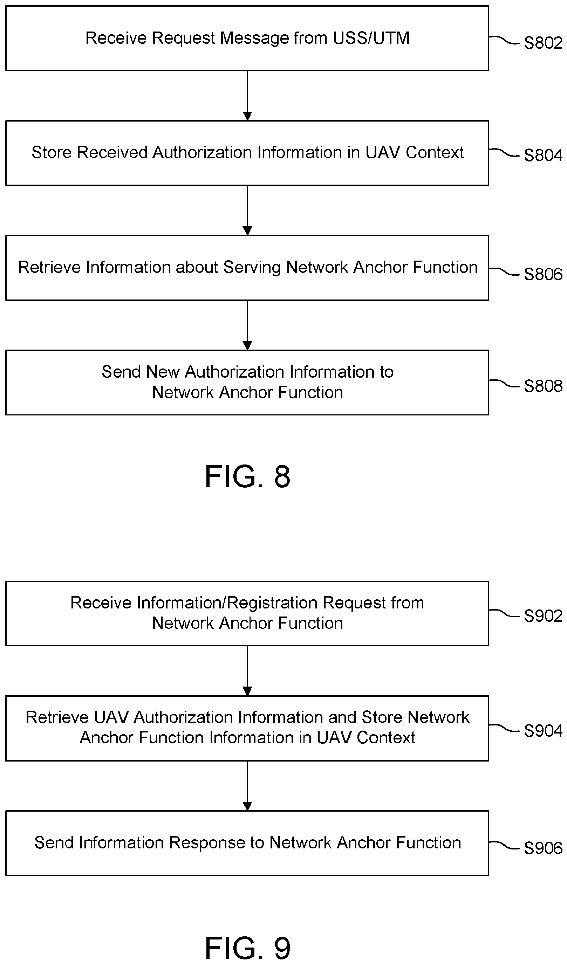

FIG. 8 illustrates a method of UAS-NF update of UAV context during re-authentication/ authorization according to an embodiment of the present principles.

In step S802, the UAS-NF receives a request message from a USS/UTM. The request message can include a 3GPP UAV ID and any of a new CAA-level UAV ID and new authorization information for UAS communications (e.g. new peer UAV-C MAC/IP address).

In step S804, the UAS-NF stores the authorization information received from the USS/UTM in the UAV context including replacing the current CAA-level UAV ID, and current authorization information for UAS communications with the new authorization information for UAS communications.

In step S806, the UAS-NF retrieves, from the UAV context identified by the 3GPP UAV ID, the information about the network anchor function serving the UE.

In step S808, the UAS-NF sends the new authorization information (e.g. new CAA-level UAV ID, new peer UAV-C address) to the network anchor function.

When a UAV moves between 5GS and EPS, the anchor function can retrieve from the UAS-NF the most recent UAV information (e.g., UAV and/or C2 communication authorization status, CAA level UAV ID) based on the UAV context. The anchor function may determine to send the request to UAS-NF for UAV information based on the system type provided by the UAV as described and to update UAS-NF with information about the UAV serving network anchor function. If UAV authorization has been revoked or if no authorization information is available for the UAV in the UAS-NF, the UAS-NF indicates that the UAV is not authorized to the network function (which may lead to a re-authentication as will be described).

FIG. 9 illustrates a method of UAS-NF querying during interworking according to an embodiment of the present principles.

In step S902, the UAS-NF receives an information/registration request message including a 3GPP UAV ID from a network anchor function (e.g. AMF or SMF/PGW-C).

In step S904, the UAS-NF retrieves, from the UAV context corresponding to the 3GPP UAV ID, the authorization information about the UAV and stores the information about the network anchor function (e.g. including system type: EPS or 5GS) in the UAV context.

In step S906, the UAS-NF sends an information response message to the network anchor function. The response message can include the 3GPP UAV ID, the authorized CAA-level UAV ID, authorization status for C2 communication (e.g. including peer UAV-C IP address).

In case the network anchor function determines to initiate UAV re-authentication by USS/UTM when the UE moves from one system to another, the UAS-NF forwards the authentication request to the USS/UTM using the address as stored during UUAA.

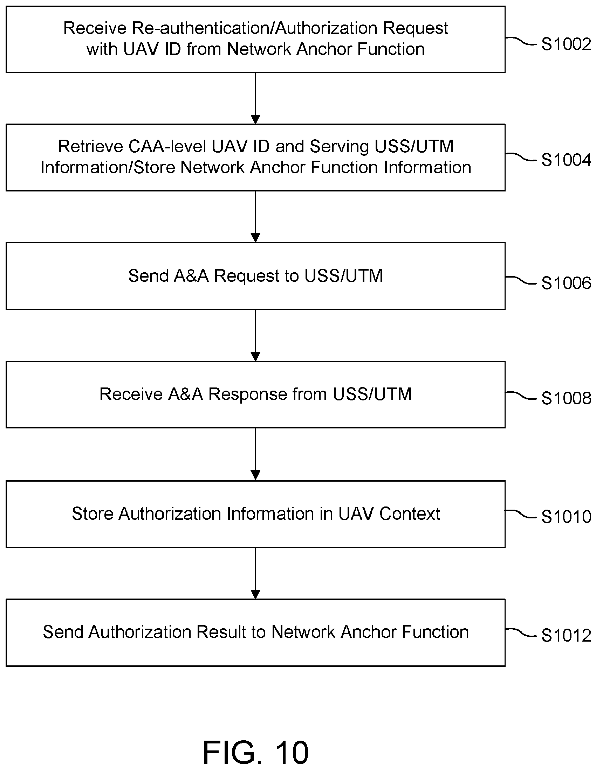

FIG. 10 illustrates a method of network-triggered UAV re-authentication during interworking according to an embodiment of the present principles.

In step S1002, the UAS-NF receives a re-authentication/authorization request message including a 3GPP UAV ID from a network anchor function (AMF or SMF/PGW-C).

In step S1004, the UAS-NF retrieves, from the UAV context identified by the 3GPP UAV ID, the CAA-level UAV ID and information about the USS/UTM serving the UE and stores the information about the network anchor function (e.g., including system Type: EPS or 5GS) in the UAV context.

In step S1006, the UAS-NF sends an authentication/authorization request message to the USS/UTM, the message including the CAA-level UAV ID and 3GPP UAV ID.

In step S1008, the UAS-NF receives an authentication/authorization response message from the USS/UTM, the message including the 3GPP UAV ID and authorization results including: a new CAA-level-UAV ID, authorization information for UAS communications (e.g., peer UAV-C MAC/IP address, C2 QoS parameters).

In step S1010, the UAS-NF stores the authorization information received from the USS/UTM in the UAV context.

In step S1012, the UAS-NF sends the authorization result to the network anchor function.

When the USS/UTM revokes the authorization for UAV or pairing/C2 communication, the UAS-NF informs the registered anchor functions in 5GS and/or EPS (e.g., based on information stored in the UAV context) so that the UAV information (e.g., in the UE context information in the network anchor function) and associated resources allocated (PDU Sessions/PDN connection) for the UE gets released.

During location tracking by USS/UTM, the UAS-NF contacts the active serving function (e.g., AMF) and when applicable provides the USS/UTM with the location information along with the latest CAA-level UAV ID as stored in the UAV context.

### Change of AMF in the 5GS

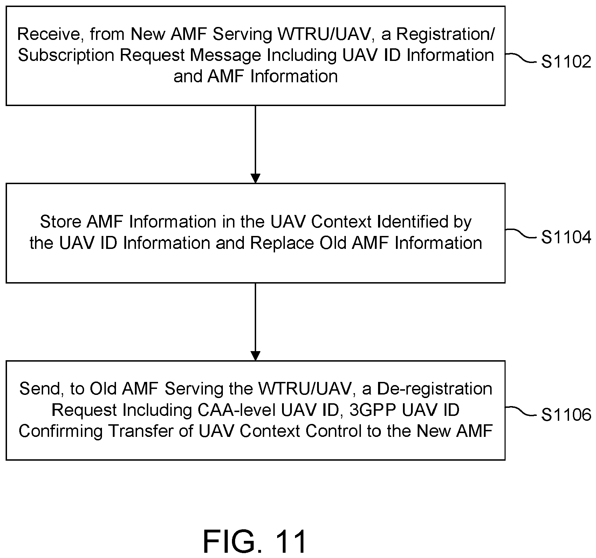

FIG. 11 illustrates a method of AMF change handling according to an embodiment of the present principles. When a change of AMF occurs in 5GS (e.g., during mobility registration) for a UAV that has performed UUAA during registration procedure, the new AMF obtains information about the UAS-NF (e.g., UAS-NF ID) when the UAV/UE context is transferred from the old AMF to the new AMF.

In step S1 102, the corresponding UAS-NF is notified by the new AMF about the change of AMF, but the UAS-NF can also, or instead, be notified by the old AMF. The UAS-NF can thus receive a message (e.g. a registration/subscription request) from the new AMF (and/or the old AMF), the message including UAV identification (e.g., 3GPP UAV ID, CAA level UAV ID) and AMF change information (e.g., new AMF ID, new notification callback).

In step S 1104, the UAS-NF updates the information about the newly registered AMF as the anchor network function in the UAV/UUAA context stored in the UAS-NF (during UUAA as described above), thus replacing information about the old AMF. The UAS-NF can use the newly registered AMF information for example to notify the new AMF of authorization revocation by USS/UTM or when requesting location information on behalf of USS/UTM as already described.

In step S 1106, the UAS-NF may notify the old AMF about the completion of the transfer of control of UAV context to new AMF, e.g., by sending a de-registration request that can include CAA-level UAV ID, and 3GPP UAV ID confirming transfer of UAV context control to the new AMF.

### Conclusion

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

## Claims

1. A method, performed by a network node storing a context for at least one unmanned aerial system, the method comprising:
receiving a notification including information indicative of an identifier of an unmanned aerial system and of a change of serving anchor node, in a wireless communication system of which the network node and the at least one unmanned aerial system are part, for the unmanned aerial system corresponding to the identifier to a second anchor node in the wireless communication system, wherein an anchor node is one of an access and mobility management function node or a session management function node; and
updating a stored context for the unmanned aerial system, the stored context including a first anchor node as a serving anchor node for the unmanned aerial system, to indicate the second anchor node as the serving anchor node.

2. The method of claim 1, wherein the notification is received from at least one of the first anchor node and the second anchor node.

3. The method of claim 1 or 2, further comprising notifying the first anchor node about completion of a transfer of control of the unmanned aerial system to the second anchor node.

4. The method of any one of claims 1 to 3, further comprising:
receiving a request message from a further node, the request message comprising information indicative of the identifier of an unmanned aerial system and further information;
retrieving, from a stored context for the unmanned aerial system corresponding to the identifier in the request message, a corresponding anchor node;and
sending, to the corresponding anchor node, at least part of the further information.

5. The method of claim 4, wherein the further node is an authorization node and the further information comprises authorization information.

6. The method of claim 5, wherein the authorization information is indicative of one of re-authentication and revocation of the unmanned aerial system corresponding to the identifier in the request message.

7. The method of any one of claims 4 to 6, wherein the request message is a request for a service.

8. A wireless transmit / receive unit, WTRU, comprising:
memory storing processor-executable program instructions; and
at least one processor configured to execute the program instructions to:
receive a notification including information indicative of an identifier of an unmanned aerial system and of a change of serving anchor node, in a wireless communication system of which the network node and the at least one unmanned aerial system are part, for the unmanned aerial system corresponding to the identifier to a second anchor node in the wireless communication system, wherein an anchor node is one of an access and mobility management function node or a session management function node; and
update a stored context for the unmanned aerial system, the stored context including a first anchor node as a serving anchor node for the unmanned aerial system, to indicate the second anchor node as the serving anchor node.

9. The WTRU of claim 8, wherein the notification is received from at least one of the first anchor node and the second anchor node.

10. The WTRU of claim 8 or 9, wherein the at least one processor is further configured to execute the program instructions to notify the first anchor node about completion of a transfer of control of the unmanned aerial system to the second anchor node.

11. The WTRU of any one of claims 8 to 10, wherein the at least one processor is further configured to execute the program instructions to:
receive a request message from a further node, the request message comprising information indicative of the identifier of an unmanned aerial system and further information;
retrieve, from a stored context for the unmanned aerial system corresponding to the identifier in the request message, a corresponding anchor node;and
send, to the corresponding anchor node, at least part of the further information.

12. The WTRU of claim 11, wherein the further node is an authorization node and the further information comprises authorization information.

13. The WTRU of claim 12, wherein the authorization information is indicative of one of re-authentication and revocation of the unmanned aerial system corresponding to the identifier in the request message.

14. The WTRU of any one of claims 11 to 13, wherein the request message is a request for a service.

15. The WTRU of claim 14, wherein the service is location tracking of the unmanned aerial system corresponding to the identifier in the request message.

## Patentansprüche

1. Verfahren, das durch einen Netzknoten ausgeführt wird, der einen Kontext für mindestens ein unbemanntes Flugsystem speichert, wobei das Verfahren umfasst: Empfangen einer Meldung, die Informationen enthält, die eine Kennung eines unbemanntes Flugsystems und eine Änderung eines bedienenden Ankerknotens angeben, in einem drahtlosen Kommunikationssystem, von dem der Netzknoten und das mindestens eine unbemannte Flugsystem ein Teil sind, für das der Kennung entsprechende unbemannte Flugsystem, an einen zweiten Ankerknoten in dem drahtlosen Kommunikationssystem, wobei ein Ankerknoten ein Zugangs- und Mobilitätsmanagementfunktionsknoten oder ein Sitzungsmanagementfunktionsknoten ist; und Aktualisieren eines gespeicherten Kontexts für das unbemannte Flugsystem, wobei der gespeicherte Kontext einen ersten Ankerknoten als einen bedienenden Ankerknoten für das unbemannte Flugsysteme enthält, um den zweiten Ankerknoten als den bedienenden Ankerknoten anzugeben.

2. Verfahren nach Anspruch 1, wobei die Meldung von dem ersten Ankerknoten und/oder von dem zweiten Ankerknoten empfangen wird.

3. Verfahren nach Anspruch 1 oder 2, das ferner das Benachrichtigen des ersten Ankerknotens über den Abschluss einer Übertragung der Steuerung des unbemannten Flugsystems an den zweiten Ankerknoten umfasst.

4. Verfahren nach einem der Ansprüche 1 bis 3, das ferner umfasst:
Empfangen einer Anforderungsnachricht von einem weiteren Knoten, wobei die Anforderungsnachricht Informationen, die die Kennung eines unbemannten Flugsystems und weitere Informationen angeben, umfasst;
Auslesen eines entsprechenden Ankerknotens von einem gespeicherten Kontext für das unbemannte Flugsystem, das der Kennung in der Anforderungsnachricht entspricht; und
Senden mindestens eines Teils der weiteren Informationen an den entsprechenden Ankerknoten.

5. Verfahren nach Anspruch 4, wobei der weitere Knoten ein Autorisierungsknoten ist und wobei die weiteren Informationen Autorisierungsinformationen umfassen.

6. Verfahren nach Anspruch 5, wobei die Autorisierungsinformationen eine erneute Authentisierung oder den Widerruf des unbemannten Flugsystems, das der Kennung in der Anforderungsnachricht entspricht, angeben.

7. Verfahren nach einem der Ansprüche 4 bis 6, wobei die Anforderungsnachricht eine Anforderung für einen Dienst ist.

8. Drahtlose Sende/Empfangs-Einheit, WTRU, die umfasst:
Speicher, der durch einen Prozessor ausführbare Programmanweisungen speichert; und
mindestens einen Prozessor, der dafür konfiguriert ist, die Programmanweisungen auszuführen, um:
eine Meldung zu empfangen, die Informationen enthält, die eine Kennung eines unbemanntes Flugsystems und eine Änderung eines bedienenden Ankerknotens angeben, in einem drahtlosen Kommunikationssystem, von dem der Netzknoten und das mindestens eine unbemannte Flugsystem ein Teil sind, für das der Kennung entsprechende unbemannte Flugsystem, an einen zweiten Ankerknoten in dem drahtlosen Kommunikationssystem, wobei ein Ankerknoten ein Zugangs- und Mobilitätsmanagementfunktionsknoten oder ein Sitzungsmanagementfunktionsknoten ist; und
einen gespeicherten Kontext für das unbemannte Flugsystem zu aktualisieren, wobei der gespeicherte Kontext einen ersten Ankerknoten als einen bedienenden Ankerknoten für das unbemannte Flugsysteme enthält, um den zweiten Ankerknoten als den bedienenden Ankerknoten anzugeben.

9. WTRU nach Anspruch 8, wobei die Benachrichtigung von dem ersten Ankerknoten und/oder von dem zweiten Ankerknoten empfangen wird.

10. WTRU nach Anspruch 8 oder 9, wobei der mindestens eine Prozessor ferner dafür konfiguriert ist, die Programmanweisungen auszuführen, um den ersten Ankerknoten über den Abschluss einer Übertragung der Steuerung des unbemannten Flugsystems an den zweiten Ankerknoten zu benachrichtigen.

11. WTRU nach einem der Ansprüche 8 bis 10, wobei der mindestens eine Prozessor ferner dafür konfiguriert ist, die Programmanweisungen auszuführen, um:
eine Anforderungsnachricht von einem weiteren Knoten zu empfangen, wobei die Anforderungsnachricht Informationen, die die Kennung eines unbemannten Flugsystems und weitere Informationen angeben, umfasst;
einen entsprechenden Ankerknoten von einem gespeicherten Kontext für das unbemannte Flugsystem, das der Kennung in der Anforderungsnachricht entspricht, auszulesen; und
mindestens einen Teil der weiteren Informationen an den entsprechenden Ankerknoten zu senden.

12. WTRU nach Anspruch 11, wobei der weitere Knoten ein Autorisierungsknoten ist und wobei die weiteren Informationen Autorisierungsinformationen umfassen.

13. WTRU nach Anspruch 12, wobei die Autorisierungsinformationen eine erneute Authentisierung oder den Widerruf des unbemannten Flugsystems, das der Kennung in der Anforderungsnachricht entspricht, angeben.

14. WTRU nach einem der Ansprüche 11 bis 13, wobei die Anforderungsnachricht eine Anforderung für einen Dienst ist.

15. WTRU nach Anspruch 14, wobei der Dienst eine Standortverfolgung des unbemannten Flugsystems, das der Kennung in der Anforderungsnachricht entspricht, ist.

## Revendications

1. Procédé mis en oeuvre par un noeud de réseau stockant un contexte pour au moins un système aérien sans pilote, le procédé comprenant :
la réception d'une notification comprenant des informations indiquant un identifiant d'un système aérien sans pilote et un remplacement d'un noeud d'ancrage de desserte, dans un système de communication sans fil dont le noeud de réseau et l'au moins un système aérien sans pilote font partie, pour le système aérien sans pilote correspondant à l'identifiant, par un deuxième noeud d'ancrage dans le système de communication sans fil, où un noeud d'ancrage est l'un d'un noeud de fonction de gestion d'accès et de mobilité et d'un noeud de fonction de gestion de session ; et
la mise à jour d'un contexte stocké pour le système aérien sans pilote, le contexte stocké comprenant un premier noeud d'ancrage comme noeud d'ancrage de desserte pour le système aérien sans pilote, afin d'indiquer le deuxième noeud d'ancrage comme noeud d'ancrage de desserte.

2. Procédé selon la revendication 1, dans lequel la notification est reçue d'au moins l'un du premier noeud d'ancrage et du deuxième noeud d'ancrage.

3. Procédé selon la revendication 1 ou 2, comprenant en outre la notification au premier noeud d'ancrage de l'achèvement d'un transfert de contrôle du système aérien sans pilote au deuxième noeud d'ancrage.

4. Procédé selon l'une quelconque des revendications 1 à 3, comprenant en outre :
la réception d'un message de demande d'un noeud supplémentaire, le message de demande comprenant des informations indiquant l'identifiant d'un système aérien sans pilote et des informations supplémentaires ;
la récupération, à partir d'un contexte stocké pour le système aérien sans pilote correspondant à l'identifiant dans le message de demande, d'un noeud d'ancrage correspondant ; et
l'envoi au noeud d'ancrage correspondant d'au moins une partie des informations supplémentaires.

5. Procédé selon la revendication 4, dans lequel le noeud supplémentaire est un noeud d'autorisation et les informations supplémentaires comprennent des informations d'autorisation.

6. Procédé selon la revendication 5, dans lequel les informations d'autorisation indiquent l'une d'une réauthentification et d'une révocation du système aérien sans pilote correspondant à l'identifiant dans le message de demande.

7. Procédé selon l'une quelconque des revendications 4 à 6, dans lequel le message de demande est une demande de service.

8. Unité d'émission/de réception sans fil, WTRU, comprenant :
une mémoire stockant des instructions de programme exécutables par un processeur ; et
au moins un processeur configuré pour exécuter les instructions de programme pour :
recevoir une notification comprenant des informations indiquant un identifiant d'un système aérien sans pilote et un remplacement d'un noeud d'ancrage de desserte, dans un système de communication sans fil dont le noeud de réseau et l'au moins un système aérien sans pilote font partie, pour le système aérien sans pilote correspondant à l'identifiant, par un deuxième noeud d'ancrage dans le système de communication sans fil, où un noeud d'ancrage est l'un d'un noeud de fonction de gestion d'accès et de mobilité et d'un noeud de fonction de gestion de session ; et
mettre à jour un contexte stocké pour le système aérien sans pilote, le contexte stocké comprenant un premier noeud d'ancrage comme noeud d'ancrage de desserte pour le système aérien sans pilote, afin d'indiquer le deuxième noeud d'ancrage comme noeud d'ancrage de desserte.

9. WTRU selon la revendication 8, dans laquelle la notification est reçue d'au moins l'un du premier noeud d'ancrage et du deuxième noeud d'ancrage.

10. WTRU selon la revendication 8 ou 9, dans laquelle l'au moins un processeur est en outre configuré pour exécuter les instructions de programme pour notifier au premier noeud d'ancrage l'achèvement d'un transfert de contrôle du système aérien sans pilote au deuxième noeud d'ancrage.

11. WTRU selon l'une des revendications 8 à 10, dans laquelle l'au moins un processeur est en outre configuré pour exécuter les instructions de programme pour :
recevoir un message de demande d'un noeud supplémentaire, le message de demande comprenant des informations indiquant l'identifiant d'un système aérien sans pilote et des informations supplémentaires ;
récupérer, à partir d'un contexte stocké pour le système aérien sans pilote correspondant à l'identifiant dans le message de demande, un noeud d'ancrage correspondant ; et
envoyer au noeud d'ancrage correspondant au moins une partie des informations supplémentaires.

12. WTRU selon la revendication 11, dans laquelle le noeud supplémentaire est un noeud d'autorisation et les informations supplémentaires comprennent des informations d'autorisation.

13. WTRU selon la revendication 12, dans laquelle les informations d'autorisation indiquent l'une d'une réauthentification et d'une révocation du système aérien sans pilote correspondant à l'identifiant dans le message de demande.

14. WTRU selon l'une quelconque des revendications 11 à 13, dans laquelle le message de demande est une demande de service.

15. WTRU selon la revendication 14, dans laquelle le service est le suivi de la position du système aérien sans pilote correspondant à l'identifiant dans le message de demande.
